# EUROPEAN PATENT APPLICATION

(11) **EP 4 570 882 A1**
(43) Date of publication of application: **18.06.2025**
(21) Application number: 23852809.5
(22) Date of filing: 26.07.2023
(51) Int. Cl.: C10C 3/00, C10C 3/04, H01M 4/583, H01M 4/02

(54) **METHOD FOR PRODUCING PETROLEUM-BASED HIGH SOFTENING POINT PITCH**

(30) Priority: 11.08.2022 KR 20220100883; 24.05.2023 KR 20230066777
(71) Applicant: OCI Company Ltd., Seoul 04532 (KR)
(72) Inventor: LEE, Joohyung, Seongnam-si Gyeonggi-do 13212 (KR); KWON, Hansol, Seongnam-si Gyeonggi-do 13212 (KR); SONG, Youngseok, Seongnam-si Gyeonggi-do 13212 (KR); LEE, Hyunchul, Seongnam-si Gyeonggi-do 13212 (KR)
(74) Representative: Zacco Sweden AB
(86) International application number: PCT/KR2023/010869
(87) International publication number: WO 2024/034928

(57) **Abstract**

A method for producing a petroleum-based high softening point pitch according to the present invention comprises: an oxidation heat treatment step for charging a raw material comprising petroleum residue with an oxidizing gas and heating them; and a reduced pressure heat treatment step for heating the product of the oxidation heat treatment step under reduced pressure conditions, wherein the petroleum residue has an aromatization index value of at least 0.73, and the boiling point of the petroleum residue when 70 vol% has been distilled on a distillation curve measured according to the method of ASTM D86 is at least 300°C. In the reduced pressure heat treatment step, the rate of increase of the softening point of the product of the oxidation heat treatment step while 1/3 of the total reduced pressure heat treatment reaction time passes may be 10-20°C/h, and the produced high softening point pitch may have a softening point of 150-300°C and a coking value of 58-85 wt%.

## Description

### FIELD

The present disclosure relates to a method for producing a petroleum-based high softening point pitch, and a high softening point pitch produced thereby.

### DESCRIPTION OF RELATED ART

A high softening point pitch is used as a raw material or a precursor material of various carbon materials and graphite materials such as carbon fiber, activated carbon, and secondary battery negative electrode materials. A method for producing the high softening point pitch via an oxidation process and a heat treatment process using a coal-based or petroleum-based material as a raw material is generally known.

When the high softening point pitch is used as a raw material for a negative electrode material of a secondary battery, it is known that the smaller the content of quinoline insoluble material, inorganic impurities such as metal, or heteroatoms such as nitrogen and sulfur contained in the high softening point pitch, the better the effect on the improvement of battery capacity, the improvement of lifespan characteristics, the improvement of output characteristics, and the like. Since a petroleum-based raw material has virtually no quinoline insoluble material, the high softening point pitch produced from the petroleum-based material has an advantage in that the amount of the quinoline insoluble material is relatively small compared to the high softening point pitch produced from the coal-based material.

However, in the case of producing the high softening point pitch using the petroleum-based material as a raw material, a coking value of the produced high softening point pitch is lower than that of the high softening point pitch produced using the coal-based material as a raw material, such that the quality of a product is disadvantageous. When the high softening point pitch is used as a raw material, a carbonization yield is low.

In a conventional technique of producing the high softening point pitch using the petroleum-based raw material, methods of using a peroxide-based compound or a halogen compound in order to increase the carbonization yield of the petroleum-based high softening point pitch have been suggested (KR2014-0090062A, KR1997-0036066A, KR2000-0026341A, and KR2015-0069372A). When the high softening point pitch is produced by the above method, there is a problem in that the process operation cost increases and the risk to safety increases as explosive or corrosive chemicals are used in the producing process.

Accordingly, the inventors of the present disclosure have identified that the petroleum-based high softening point pitch can be produced in an economical, efficient and safe manner by controlling the physical properties of the petroleum-based raw material and controlling operating conditions in the producing process, and thus have completed the present disclosure.

### DISCLOSURE

### TECHNICAL PURPOSE

A purpose of the present disclosure is to provide a method for producing a petroleum-based high softening point pitch of excellent quality with an increased coking value by using a raw material including petroleum-based residual oil.

A purpose of the present disclosure is to provide a method for economically and safely producing a petroleum-based high softening point pitch of excellent quality.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

According to one aspect of the present disclosure, there may be provided a method for producing a petroleum-based high softening point pitch, the method including: an oxidation heat treatment step of charging a raw material including petroleum-based residue oil with an oxidizing gas and heating them; and a reduced pressure heat treatment step of heating a product resulting from the oxidation heat treatment step under a reduced pressure condition, wherein the petroleum-based residue oil may have an aromatization index value of 0.73 or greater, and may have a boiling point when 70 vol % thereof may have been distilled on a distillation curve measured according to ASTM D86 may be 300°C or higher, wherein in the reduced pressure heat treatment step, an increase rate of a softening point of the product resulting from the oxidation heat treatment during elapse of 1/3 of a total time of the reduced pressure heat treatment may be in a range of 10 to 20° C/h, wherein the high softening point pitch may have a softening point of 150 to 300°C and a coking value of 58 to 85wt %.

The high softening point pitch may have a softening point of 200 to 300°C.

The petroleum-based residue oil may include at least one selected from the group consisting of pyrolysis fuel oil (PFO), naphtha cracking bottom oil (NCB), ethylene bottom oil (EBO), fluid catalytic cracking-decant oil (FCC-DO), residue fluid catalytic cracking-decant oil (RFCC-DO), and aromatic extract (AE).

The raw material including the petroleum-based residual oil may include hydrotreated petroleum-based residual oil.

A process temperature of the oxidation heat treatment step may be in a range of 250 to 400°C, wherein a process time of the oxidation heat treatment step may be in a range of 1 to 20 hours, wherein a charge flow rate of the oxidizing gas may be in a range of 0.01 to 2 L/min relative to 1 kg of the petroleum residual oil.

The oxidizing gas may include at least one selected from the group consisting of air, oxygen, and ozone.

The oxidizing gas may further include an inert gas for dilution, wherein the inert gas for dilution may include at least one selected from the group consisting of nitrogen and argon.

A process pressure of the reduced pressure heat treatment step may be in a range of 1 to 300torr, wherein a process temperature of the reduced pressure heat treatment step may be in a range of 300 to 430°C, wherein a process time of the reduced pressure heat treatment step may be in a range of 4 to 20 hours.

An inert gas or steam may be added in the reduced pressure heat treatment step, wherein the inert gas may include at least one selected from the group consisting of nitrogen and argon.

The method may further include an atmospheric pressure heat treatment step of heat-treating a resultant product from the reduced pressure heat treatment step under an atmospheric pressure, wherein a process temperature of the atmospheric pressure heat treatment step may be in a range of 300 to 430°C, wherein a process time of the atmospheric pressure heat treatment may be in a range of 0.5 to 20 hours.

According to another aspect of the present disclosure, there may be provided a petroleum-based high softening point pitch produced using the method for producing the petroleum-based high softening point pitch according to one aspect of the present disclosure.

According to still another aspect of the present disclosure, there is provided a negative electrode material for a secondary battery, comprising a petroleum-based high softening point pitch produced using the method for producing the petroleum-based high softening point pitch according to one aspect of the present disclosure.

### TECHNICAL EFFECT

The method for producing the petroleum-based high softening point pitch according to the present disclosure can produce the petroleum-based high softening point pitch having a significantly increased cocking value using the petroleum-based raw material, and thus can produce the petroleum-based high softening point pitch having high quality and high carbonization yield.

The method for producing the petroleum-based high softening point pitch according to the present disclosure does not use a peroxide-based compound or a halogen compound, thereby eliminating the risk of explosion during the producing process and reducing the discharge of environmental pollutants. Accordingly, the method of the present disclosure safely and economically produces the high-quality petroleum-based high softening point pitch.

When using the negative electrode material for a secondary battery including the petroleum-based high softening point pitch prepared by the method for preparing a petroleum-based high softening point pitch according to the present disclosure, the capacity, lifespan, and charging/discharging efficiency of the secondary battery may be improved.

In addition to the above-described effects, specific effects of the present disclosure will be described together while describing specific details for implementing the present disclosure.

### BRIEF DESCRIPTION OF DRAWINGS

FIG. 1 is a flowchart illustrating a method for producing a petroleum-based high softening point pitch according to an embodiment of the present disclosure.
FIG. 2 is a schematic process diagram for illustrating a method for producing a petroleum-based high softening point pitch according to an embodiment of the present disclosure.

### DETAILED DESCRIPTIONS

The above-described purpose, features and advantages will be described in detail with reference to the accompanying drawings, and accordingly, embodiments of the present disclosure may be easily implemented by a person having ordinary skill in the art to which the present disclosure belongs. In describing the present disclosure, when it is determined that a detailed description of a known technology related to the present disclosure may unnecessarily obscure the gist of the present disclosure, the detailed description thereof will be omitted. Terms to be described below are terms described in consideration of functions and effects in the present disclosure, and the meaning of each term should be interpreted based on the contents herein.

As used herein, when a component is referred to as being on another component, it means that the former may be formed directly on the latter or a third component may be interposed therebetween. In addition, in the drawings, the thickness of the components is exaggerated for the effective description of the technical content. As used herein, parts indicated by the same reference numerals represent the same elements.

In various embodiments of the present disclosure, terms such as first, second, third, and the like have been used to describe various components, but these components should not be limited by these terms. These terms are only used to distinguish one component from another.

The terms used herein are used for the purpose of describing the embodiments and are not intended to limit the present disclosure. As used herein, the singular constitutes "a" and "an" are intended to include the plural constitutes as well, unless the context clearly indicates otherwise. The term 'including', 'containing', etc. as used herein does not exclude the presence or addition of one or more other components.

Hereinafter, the present disclosure will be described in detail.

According to one aspect of the present disclosure, the present disclosure provides a method for producing a petroleum-based high softening point pitch.

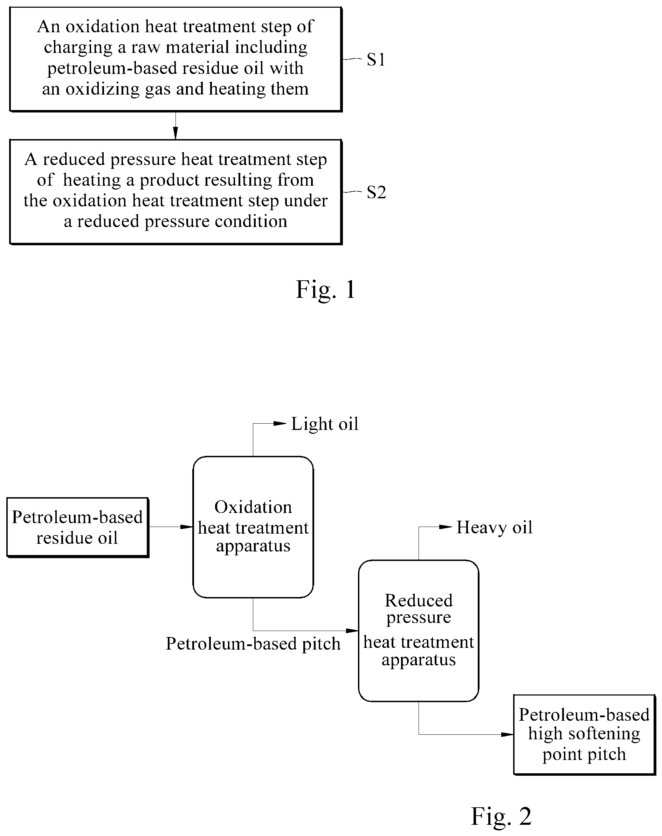

Referring to FIGS. 1 and 2, a method for producing a petroleum-based high softening point pitch according to an embodiment of the present disclosure may include an oxidation heat treatment step S1 of charging an oxidizing gas into a raw material including petroleum-based residual oil and heating them; and a reduced pressure heat treatment step S2 of heating a resultant product of the oxidation heat treatment step in a reduced pressure condition.

### <Oxidation Heat Treatment S1 >

Preferably, an aromatization index value of the petroleum-based residue oil included in the raw material of the present disclosure may be in a range of 0.73 or greater, 0.75 or greater, and 0.80 or greater. When the petroleum-based residual oil having the aromatization index value lower than 0.73 is used as the raw material, there may be a problem that the petroleum-based residual oil has a high reactivity, and thus a large amount of oil is discharged therefrom due to decomposition, and it is difficult to achieve a mesophase growth of thereof during carbonization, such that a high-quality high softening point pitch cannot be obtained.

In addition, a boiling point of the petroleum-based residue oil when 70% thereof has been distilled on a distillation curve measured according to the standard ASTM D86 method may be in a range of preferably 300°C or greater, 320°C or greater, and 330°C or greater. When the raw material having the boiling point lower than 300°C when 70% thereof has been distilled on the distillation curve is used, not only the high softening point pitch low cannot be produced, but also it is difficult to control the reaction temperature in the reduced pressure heat treatment process, and a high molecular weight material in the molecular weight distribution of the produced high softening point pitch is insufficient, thereby causing a problem in that the quality of the product is deteriorated.

In general, the petroleum-based residue oil has a higher molecular weight and a higher boiling point than those of light oil, and thus may be suitably used as the raw material for a carbon material. However, the carbon material produced from the petroleum-based residue oil may have a lower carbonization yield and a lower coking value than those of the carbon material produced from coal residue, which cause a deterioration in the quality of the final produced product.

In order to solve the technical problem, the inventors of the present disclosure have identified that a high softening point pitch having excellent physical properties in which the coking value is high and a softening point is adjusted to 150 to 300°C is able to be produced even though the petroleum-based residual oil is used as the raw material, by using the petroleum-based residual oil in which the aromatization index and physical properties of the distillation curve are controlled as the raw material, and further, by controlling the reduced pressure heat treatment operation condition.

The petroleum-based residue oil used as the raw material is not particularly limited as long as it is used in the art. In one example, the petroleum-based residue oil may include one or more selected from the group consisting of pyrolysis fuel oil (PFO), naphtha cracking bottom oil (NCB), ethylene bottom oil (EBO), fluid catalytic cracking-decant oil (FCC-DO), residue fluid catalytic cracking-decant oil (RFCC-DO), and aromatic extract (AE).

In addition, since the hydrotreated petroleum-based residue oil may be used as the raw material, the raw material including the petroleum-based residue oil may include the petroleum-based residue oil and the hydrotreated petroleum-based residue oil.

A process temperature of the oxidation heat treatment step S1 is the temperature of the reactant in the oxidation heat treatment step, and is preferably in a range of 250 to 400°C, 300 to 400°C, or 300 to 350°C When the temperature of the reactant of the oxidation heat treatment process is lower than 250°C, the molecular weight of the petroleum-based residue oil is not sufficiently increased, and thus the yield of the pitch of the high softening point, which is the final product, may be lowered. In addition, when the temperature of the reactant of the oxidation heat treatment process is higher than 400°C, the content of the insoluble quinoline in the reactant of the oxidation heat treatment process is rapidly increased, such that a coking phenomenon may occur. In addition, when the petroleum-based residue oil is heat-treated under a high temperature condition or an oxidation reaction condition such that an excessive polymerization reaction of aromatic compounds proceeds, the petroleum-based residue oil may be converted into an insoluble material.

A process time of the oxidation heat treatment step S1 may be preferably in a range of 1 to 20 hours, 5 to 20 hours, or 10 to 15 hours. However, the present disclosure is not limited thereto. When the process time of the oxidation heat treatment step is smaller than 1 hour, the oxidation reaction may not sufficiently occur. In addition, when the process time of the oxidation heat treatment step exceeds 20 hours, excessive polymerization may be caused, such that the physical properties of the final product, that is, the pitch of the high softening point, may be deteriorated. In particular, when the oxidation reaction proceeds excessively, the oxygen content of the prepared high softening point pitch may be high. Accordingly, performance of the secondary battery may be deteriorated when the thus prepared high softening point pitch is used as a raw material for a negative electrode material of the secondary battery.

In the oxidation heat treatment step S1, a charging flow rate of the oxidizing gas may be preferably in a range of 0.01 to 2 L/min, 0.3 to 2 L/min, 0.5 to 2 L/min, and 0.3 to 1 L/min, relative to 1 kg of the petroleum-based residue oil. When the flow rate of the oxidizing gas is smaller than 0.01 L/min compared to 1 kg of the petroleum-based residual oil, the crosslinking reaction does not occur sufficiently, such that the yield and quality of the product may be deteriorated. On the other hand, when the flow rate of the oxidizing gas exceeds 2 L/min relative to 1 kg of the petroleum-based residual oil, the amount of the oxidizing gas as injected is excessive, so that the toluene insoluble content as a heavy component rapidly increases, and the quinoline insoluble (QI) content may also increase.

In the oxidative heat treatment step S1, the oxidative gas may include one or more selected from the group consisting of air, oxygen, and ozone, and for example, the oxidative gas may directly use air in the atmosphere. In addition, since an inert gas may be contained in the oxidizing gas in a diluted manner, the oxidizing gas may further include an inert gas for dilution. The inert gas for dilution may include one or more selected from the group consisting of nitrogen and argon.

In general, in order to increase the softening point of the final product, that is, the high softening point pitch, a catalyst may be used under a high pressure condition. In order to reduce the quinoline insoluble (QI) content in the high softening point pitch, a peroxide-based compound have been used in a mixed manner with the oxidizing gas.

However, when the catalyst is used under the high pressure condition, not only an expensive high pressure container is required, but also a separate process of removing the catalyst is required. Thus, a cost of producing the high softening point pitch may increase.

In addition, when the peroxide-based compound is additionally incorporated into the oxidizing gas, there may be a risk of explosion during a producing process due to the high reactivity of the peroxide-based compound, and the cost of the peroxide-based compound, the cost of managing dangerous substances, and the cost of treating wastewater may be increased. Accordingly, economic feasibility for producing the high softening point pitch in a large quantity may be deteriorated.

According to the present disclosure, the molecular weight of the petroleum-based residue oil may be increased via the oxidation heat treatment process, and the yield of the high softening point pitch as the final product may be improved. In particular, since the high pressure condition may not be required in the oxidation heat treatment process and the catalyst may not be used, a high-quality petroleum-based high softening point pitch may be produced in an economical manner.

Furthermore, according to the present disclosure, the peroxide-based compound may not be used in an oxidation reactor before the oxidation heat treatment process is performed or while the oxidation heat treatment process is performed. Since the peroxide-based compound is not used as described above, there is an advantage that the producing process may be economical and the risk of explosion during the producing process may be prevented.

In one example, the petroleum-based residue oil subjected to the oxidation heat treatment may be converted into a petroleum-based pitch under the oxidation heat treatment step S1. Therefore, in the present disclosure, the 'petroleum-based pitch' may mean a petroleum-based residual oil subjected to the oxidation heat treatment in the oxidation heat treatment step S1.

### <Heat Treatment under Reduced Pressure S2 >

The reduced pressure heat treatment step S2 of heating the petroleum-based pitch as the result of the oxidation heat treatment step S1, under a reduced pressure condition may be performed. The reduced pressure heat treatment process may be performed in a reduced pressure heat treatment apparatus.

The reduced pressure heat treatment apparatus in which the reduced pressure heat treatment step S2 is performed may include a sampling device of the reactant to control the softening point increase rate of the initial reactant, a device for adjusting the outflow amount of oil flowing out to the off gas of the reactor, and a device for adjusting the internal pressure of the reactor.

Under the reduced pressure heat treatment in S2, the heavy oil of the petroleum-based pitch may be removed, the softening point may be increased, and the toluene insoluble content may be increased, thereby increasing the carbonization yield of the pitch.

Unlike the present disclosure, when the petroleum-based pitch is subjected to the atmospheric pressure heat treatment step or the pressurized heat treatment step instead of the reduced pressure heat treatment step, it may be difficult to remove the heavy oil, and the softening point of the pitch may not be increased, thereby causing problems.

In the reduced pressure heat treatment S2, the softening point increase rate of the product (petroleum-based pitch) of the step of heat treatment under oxidation during the elapse of 1/3 of the total time of heat treatment under reduced pressure may be preferably in a range of 10 to 20°C/h, 12 to 20°C/h, 14 to 20°C/h, 14 to 18°C/h, or 14 to 16°C/h.

When the softening point increase rate is 10°C/h or lower, the heavy oil that is not discharged acts as a solvent to suppress the generation of toluene insoluble material (TI) via thermal polymerization of the high softening point pitch, and finally, the coking value of the high softening point pitch may be lowered. In addition, since oil is not discharged at the beginning of the reaction, the oil is polymerized by heat and thus it is more difficult to remove oil having a larger molecular weight in the latter portion of the reaction period, and thus it may be difficult to increase the softening point of the pitch.

On the other hand, when the softening point increase rate is 20°C/h or greater, as the reduced pressure heat treatment reaction time is shortened, the molecular weight of the high softening point pitch may not be sufficiently increased, and accordingly, there may be a problem in that the product quality of the high softening point pitch is deteriorated.

A process pressure of the reduced pressure heat treatment in S2 may be preferably in a range of 1 to 300 torr, 1 to 100 torr, 1 to 200 torr, 50 to 250 torr, 80 to 100 torr, or 80 to 150 torr. However, the present disclosure is not limited thereto.

A process heat treatment temperature of the reduced pressure heat treatment step S2 may be preferably in a range of 300 to 430°C, 200 to 400°C, or 300 to 350°C When the heat treatment temperature of the reduced pressure heat treatment process is lower than 300°C, it may be difficult to remove the heavy oil, and the generation of the toluene insoluble content is lowered, and thus it may be difficult to produce a high-quality high softening point pitch. In addition, since the heavy oil in the pitch is not sufficiently removed therefrom, there may be a limit in increasing the softening point of the petroleum-based pitch. When the heat treatment temperature of the reduced pressure heat treatment process is higher than 430°C, a coking phenomenon of the petroleum-based pitch may occur to form the coke, and the quinoline insoluble content (QI) may be rapidly increased.

A process time of the reduced pressure heat treatment step S2 may be preferably in a range of 1 to 20 hours, 4 to 20 hours, 5 to 15 hours, or 5 to 12 hours. When the process time of the reduced pressure heat treatment process is smaller than 1 hour, the heavy oil may not be sufficiently removed, and thus it may be difficult to produce the pitch of the high softening point. In addition, due to the lack of a thermal polymerization reaction time, the toluene insoluble content may not be sufficiently produced, and a low quality high softening point pitch having a low carbonization yield may be prepared. When the process time of the reduced pressure heat treatment process exceeds 20 hours, excessive polymerization may be performed to excessively produce the toluene insoluble content, and an operation cost of the process and the producing cost of the product may increase due to an increase in the process time.

In the reduced pressure heat treatment in S2, an inert gas or steam may be incorporated, and the inert gas may include one or more selected from the group consisting of nitrogen and argon, and thus the heavy oil in the petroleum-based pitch may be more effectively removed therefrom. In particular, when the inert gas or steam is heated and charged, the heavy oil may be more effectively removed from the petroleum-based pitch.

For example, the flow rate of the inert gas or steam may be in a range of 0.01 to 2.0 L/min based on 1 kg of the petroleum-based pitch. However, the present disclosure is not limited thereto.

In the reduced pressure heat treatment step S2 of the present disclosure, an oxidizing gas is not charged. Unlike the present disclosure, when the oxidizing gas is charged in the reduced pressure heat treatment step S2, there is a problem in that the quinoline insoluble content is rapidly produced via an oxidation reaction at a high temperature.

### < Atmospheric Heat Treatment S3 >

In the method for producing the petroleum-based high softening point pitch according to the present disclosure, after the reduced pressure heat treatment in S2, an atmospheric pressure heat treatment step S3 may be selectively further performed on the petroleum-based pitch. Under the atmospheric pressure heat treatment step S3, the toluene insoluble content in the pitch of the petroleum-based high softening point may be increased.

In one example, the process heat treatment temperature of the atmospheric pressure heat treatment step S3 may be preferably in a range of 300 to 430°C However, the present disclosure is not necessarily limited thereto. When the heat treatment temperature of the atmospheric pressure heat treatment step S3 is lower than 300°C, it may be difficult to generate the heavy toluene insoluble content. when the heat treatment temperature of the atmospheric pressure heat treatment step is higher than 430°C, a coking phenomenon of the petroleum pitch may occur to form the coke, and a problem in which the quinoline insoluble content is rapidly increased may occur.

For example, a process time of the atmospheric pressure heat treatment step S3 may be in a range of 0.5 to 20 hours. On the other hand, when the process time of the atmospheric pressure heat treatment step S3 is smaller than 0.5 hours (=30 minutes), the heat treatment reaction time may be too short to sufficiently generate the toluene insoluble content. When the execution time of the atmospheric pressure heat treatment step S3 exceeds 20 hours, the operation cost of the process and the producing cost of the product may increase due to the increase in the operation time.

### < High Softening Point Pitch >

The softening point of the petroleum-based high softening point pitch produced by the method for producing the petroleum-based high softening point pitch according to the present disclosure may be preferably in a range of 150 to 300°C or in a range of 200 to 300°C

The coking value of the pitch is a property that affects the yield at which the pitch is converted to a carbon material when the pitch is carbonized. The coking value is comprehensively affected by the molecular weight, the aromatization index, the molecular structure, etc. of the pitch. It is preferable that the coking value of the high softening point pitch of the present disclosure be in a range of 50 wt % or greater, 58 wt % or greater, or a range of 58 wt % to 85% with respect to the total weight of the petroleum-based high softening point pitch. When the coking value of the high softening point pitch is lower than 58 wt %, the large amount of the volatilized material may be generated when carbonizing the high softening point pitch, and the yield at which the pitch is converted into the carbon material is low, so that the resultant pitch may not be used as an excellent carbon material. On the other hand, when the coking value of the high softening point pitch exceeds 85 wt %, the volatile materials are hardly included in the high softening point pitch, and the high softening point pitch may be composed of aromatized hydrocarbons having a high molecular weight, and thus it may be difficult to process the high softening point pitch or uniformly coat the same on the negative electrode material of the secondary battery.

As described above, the petroleum-based high softening point pitch produced by the method for producing the petroleum-based high softening point pitch according to the present disclosure has the high softening point, and at the same time, the significantly increased coking value.

According to the present disclosure, the oxidation heat treatment step S1 and the reduced pressure heat treatment step S2 are performed using the petroleum-based residual oil as a raw material to produce the petroleum-based high softening point pitch. In this regard, the petroleum-based high softening point pitch may be used as a raw material of a carbon material or a graphite material, or a precursor material of a carbon material or a graphite material. When the petroleum-based high softening point pitch is used as a raw material for various carbon materials and graphite materials, the petroleum-based high softening point pitch may be used as an excellent precursor material having a high carbonization yield. For example, the petroleum-based high softening point pitch may be used as a precursor material of carbon fibers via a carbonization process and a graphitization process on the petroleum-based high softening point pitch.

In an embodiment, when the petroleum-based high softening point pitch according to the present disclosure is used as the precursor material of the carbon fiber, characteristics such as the high softening point and carbonization yield, the high coking value, and a low impurity content of the petroleum-based high softening point pitch are achieved. Accordingly, physical properties such as tensile strength and tensile modulus of the carbon fiber produced using the petroleum-based high softening point pitch may be excellent. In addition, in an embodiment, the activated carbon prepared using the petroleum-based high softening point pitch may have excellent specific surface area and mechanical strength.

In an embodiment, the petroleum-based high softening point pitch of the present disclosure may be used as a binder material or a coating material of an negative electrode material (for example, a natural graphite negative electrode material, an artificial graphite negative electrode material, etc.).

In an embodiment, a carbonization process may be performed on the petroleum-based high softening point pitch such that the resulting product may be used as a carbon-based negative electrode material. The carbonization process and a graphitization process may be performed on the petroleum-based high softening point pitch such that the resulting product may be used as a precursor material of the carbon fiber.

In an embodiment, when the petroleum-based high softening point pitch produced by the method for producing the petroleum-based high softening point pitch according to the present disclosure is used as a raw material for an negative electrode material of a secondary battery, the performance of the produced secondary battery may be improved.

### Examples

Hereinafter, the present disclosure will be described in more detail based on Examples. However, the following Examples are merely examples of the present disclosure, and the contents of the present disclosure are not limited to the following Examples.

### Present Example 1

An oxidation heat treatment step in which the petroleum-based residue oil as the raw material and the oxidizing gas were input into an oxidation reactor, followed by heating was performed. In this regard, the pyrolysis fuel oil (PFO) having an aromatization index of 0.76 and a boiling point of 320°C when 70% thereof was distilled on the distillation curve measured according to a standard ASTM D86 method was employed as the petroleum-based residue oil. Air was used as the oxidizing gas. The air was charged into the reactor at a flow rate of 0.5 L/min relative to 1 kg of the pyrolysis fuel oil (PFO). The temperature of the reactant in the oxidation heat treatment step was 320°C, and the oxidation heat treatment process was performed for 6 hours.

Thereafter, the pressure of the reactor was reduced to a pressure of 80 torr, and the heat treatment step under the reduced pressure was performed at 350°C for 15 hours to prepare the petroleum-based high softening point pitch. In the heat treatment step under reduced pressure, the increase rate of the softening point of the reactant during the initial 5 hours was adjusted to 14°C/h.

The softening point of the produced petroleum-based high softening point pitch was 242°C, and the coking value thereof was 68wt% based on the total weight of the petroleum-based high softening point pitch.

### Present Example 2

An oxidation heat treatment step in which the petroleum-based residue oil as the raw material and the oxidizing gas were input into an oxidation reactor, followed by heating was performed. In this regard, the pyrolysis fuel oil (PFO) having an aromatization index of 0.80 and a boiling point of 340°C when 70% thereof was distilled on the distillation curve measured according to a standard ASTM D86 method was employed as the petroleum-based residue oil. Air was used as the oxidizing gas. The air was charged into the reactor at a flow rate of 0.3 L/min relative to 1 kg of the pyrolysis fuel oil (PFO). The temperature of the reactant in the oxidation heat treatment step was 350°C, and the oxidation heat treatment process was performed for 10 hours.

Thereafter, the pressure of the reactor was reduced to a pressure of 150 torr, and the heat treatment step under the reduced pressure was performed at 370°C for 12 hours to prepare the petroleum-based high softening point pitch. In the heat treatment step under reduced pressure, the increase rate of the softening point of the reactant during the initial 4 hours was adjusted to 16°C/h.

The softening point of the produced petroleum-based high softening point pitch was 258°C, and the coking value thereof was 74wt% based on the total weight of the petroleum-based high softening point pitch.

### Comparative Example 1

An oxidation heat treatment step in which the petroleum-based residue oil as the raw material and the oxidizing gas were input into an oxidation reactor, followed by heating was performed. In this regard, the pyrolysis fuel oil (PFO) having an aromatization index of 0.68 and a boiling point of 310°C when 70% thereof was distilled on the distillation curve measured according to a standard ASTM D86 method was employed as the petroleum-based residue oil. Air was used as the oxidizing gas. The air was charged into the reactor at a flow rate of 0.3 L/min relative to 1 kg of the pyrolysis fuel oil (PFO). The temperature of the reactant in the oxidation heat treatment step was 350°C, and the oxidation heat treatment process was performed for 10 hours.

Thereafter, the pressure of the reactor was reduced to a pressure of 150 torr, and the heat treatment step under the reduced pressure was performed at 370°C for 12 hours to prepare the petroleum-based high softening point pitch. In the heat treatment step under reduced pressure, the increase rate of the softening point of the reactant during the initial 4 hours was adjusted to 16°C/h.

The softening point of the produced petroleum-based high softening point pitch was 245°C, and the coking value thereof was 56wt% based on the total weight of the petroleum-based high softening point pitch.

### Comparative Example 2

An oxidation heat treatment step in which the petroleum-based residue oil as the raw material and the oxidizing gas were input into an oxidation reactor, followed by heating was performed. In this regard, the pyrolysis fuel oil (PFO) having an aromatization index of 0.76 and a boiling point of 280°C when 70% thereof was distilled on the distillation curve measured according to a standard ASTM D86 method was employed as the petroleum-based residue oil. Air was used as the oxidizing gas. The air was charged into the reactor at a flow rate of 0.5 L/min relative to 1 kg of the pyrolysis fuel oil (PFO). The temperature of the reactant in the oxidation heat treatment step was 320°C, and the oxidation heat treatment process was performed for 6 hours.

Thereafter, the pressure of the reactor was reduced to a pressure of 80 torr, and the heat treatment step under the reduced pressure was performed at 350°C for 15 hours to prepare the petroleum-based high softening point pitch. In the heat treatment step under reduced pressure, the increase rate of the softening point of the reactant during the initial 5 hours was adjusted to 14°C/h.

The softening point of the produced petroleum-based high softening point pitch was 244°C, and the coking value thereof was 55wt% based on the total weight of the petroleum-based high softening point pitch.

### Comparative Example 3

The process was performed in the same manner as in Present Example 1, except that there is a difference only in that the increase rate of the softening point of the reactant during the initial 5 hours in the heat treatment under reduced pressure was adjusted to 24°C/h rather than 14°C/h.

The softening point of the produced petroleum-based high softening point pitch was 238°C, and the coking value thereof was 53 wt% based on the total weight of the petroleum-based high softening point pitch.

The aromatization index of each of the petroleum-based residue oils in Present Examples 1 to 2 and Comparative Examples 1 to 3, the boiling point thereof when 70% thereof has been distilled on the distillation curve measured according to a standard ASTM D86 method, the initial softening point increase rate thereof in the step of heat treatment under reduced pressure, and the physical properties of the prepared petroleum-based high softening point pitch are shown in Table 1 as set forth below.

**Table 1**

| | Present Example 1 | Present Example 2 | Comparative Example 1 | Comparative Example 2 | Comparative Example 3 |
|---|---|---|---|---|---|
| Aromatization index of petroleum-based residue oil | 0.76 | 0.80 | 0.68 | 0.76 | 0.76 |
| Boiling point of petroleum-based residue oil when 70% thereof has been distilled | 320 | 340 | 310 | 280 | 320 |
| Initial softening point increase rate (°C/h) in heat treatment under reduced pressure | 14 | 16 | 16 | 14 | 24 |
| Softening point of high softening point pitch (°C) | 242 | 258 | 245 | 244 | 238 |
| Coking value of high softening point pitch (wt%) | 68 | 74 | 56 | 55 | 53 |

Referring to Table 1, it may be identified that each of the petroleum-based high softening point pitches of Present Examples 1 and 2 has a high softening point of 200°C or higher and a high coking value of 58 wt % or greater.

On the other hand, it was identified that in Comparative Example 1, when the pyrolysis fuel oil (PFO) having an aromatization index of 0.68 and a boiling point of 310°C when 70% thereof had been distilled on the distillation curve measured according to a standard ASTM D86 method was used as a starting material, the coking value of the prepared petroleum-based high softening point pitch due to the low aromatization index of the petroleum-based raw material was low.

In addition, it was identified that in Comparative Example 2, when the pyrolysis fuel oil (PFO) having the same aromatization index value as that of Present Example 1 was used, but having a low boiling point when 70% thereof had been distilled on the distillation curve measured according to a standard ASTM D86 method was used as a starting material, the coking value of the prepared petroleum-based high softening point pitch was low.

In addition, in Comparative Example 3, the same petroleum-based residual oil as that in Present Example 1 was used as a raw material, and an oxidation heat treatment reaction process was performed under the same operating conditions. However, it was identified that the coking value of the petroleum-based high softening point pitch produced by increasing the initial softening point increase rate of the reactant to 24° C/h in the step of the reduced pressure heat treatment was low.

Although the present disclosure has been described above in more detail with reference to the embodiments and drawings of the present disclosure, the present disclosure is not necessarily limited to the embodiments and drawings, and may be variously modified and implemented within a range not departing from the technical spirit of the present disclosure. Therefore, the embodiments disclosed in the present disclosure are not intended for limiting the technical idea of the present disclosure, but for describing the present disclosure, and the scope of the technical idea of the present disclosure is not limited by these embodiments. Therefore, it should be understood that the embodiments described above are examples in all aspects and the present disclosure is not limited thereto. The scope of protection of the present specification and the present disclosure should be interpreted by the claims, and all technical ideas within the equivalent scope should be interpreted as being included in the scope of the present specification and the present disclosure.

## Claims

1. A method for producing a petroleum-based high softening point pitch, the method comprising:
an oxidation heat treatment step of charging a raw material including petroleum-based residue oil with an oxidizing gas and heating them; and
a reduced pressure heat treatment step of heating a product resulting from the oxidation heat treatment step under a reduced pressure condition,
wherein the petroleum-based residue oil has an aromatization index value of 0.73 or greater, and has a boiling point when 70 vol % thereof has been distilled on a distillation curve measured according to ASTM D86 is 300°C or higher,
wherein in the reduced pressure heat treatment step, an increase rate of a softening point of the product resulting from the oxidation heat treatment during elapse of 1/3 of a total time of the reduced pressure heat treatment is in a range of 10 to 20° C/h,
wherein the high softening point pitch has a softening point of 150 to 300°C and a coking value of 58 to 85wt %.

2. The method for producing the petroleum-based high softening point pitch of claim 1, wherein the high softening point pitch has a softening point of 200 to 300°C.

3. The method for producing the petroleum-based high softening point pitch of claim 1, wherein the petroleum-based residue oil includes at least one selected from the group consisting of pyrolysis fuel oil (PFO), naphtha cracking bottom oil (NCB), ethylene bottom oil (EBO), fluid catalytic cracking-decant oil (FCC-DO), residue fluid catalytic cracking-decant oil (RFCC-DO), and aromatic extract (AE).

4. The method for producing the petroleum-based high softening point pitch of claim 1, wherein the raw material including the petroleum-based residual oil includes hydrotreated petroleum-based residual oil.

5. The method for producing the petroleum-based high softening point pitch of claim 1, wherein a process temperature of the oxidation heat treatment step is in a range of 250 to 400°C,
wherein a process time of the oxidation heat treatment step is in a range of 1 to 20 hours,
wherein a charge flow rate of the oxidizing gas is in a range of 0.01 to 2 L/min relative to 1 kg of the petroleum residual oil.

6. The method for producing the petroleum-based high softening point pitch of claim 1, wherein the oxidizing gas includes at least one selected from the group consisting of air, oxygen, and ozone.

7. The method for producing the petroleum-based high softening point pitch of claim 1, wherein the oxidizing gas further includes an inert gas for dilution,
wherein the inert gas for dilution includes at least one selected from the group consisting of nitrogen and argon.

8. The method for producing the petroleum-based high softening point pitch of claim 1, wherein a process pressure of the reduced pressure heat treatment step is in a range of 1 to 300torr,
wherein a process temperature of the reduced pressure heat treatment step is in a range of 300 to 430°C,
wherein a process time of the reduced pressure heat treatment step is in a range of 4 to 20 hours.

9. The method for producing the petroleum-based high softening point pitch of claim 1, wherein an inert gas or steam is added in the reduced pressure heat treatment step, wherein the inert gas includes at least one selected from the group consisting of nitrogen and argon.

10. The method for producing the petroleum-based high softening point pitch of claim 1, wherein the method further comprises an atmospheric pressure heat treatment step of heat-treating a resultant product from the reduced pressure heat treatment step under an atmospheric pressure,
wherein a process temperature of the atmospheric pressure heat treatment step is in a range of 300 to 430°C,
wherein a process time of the atmospheric pressure heat treatment is in a range of 0.5 to 20 hours.

11. A petroleum-based high softening point pitch produced using the method for producing the petroleum-based high softening point pitch according to one of claims 1 to 10.

12. A negative electrode material for a secondary battery, comprising a petroleum-based high softening point pitch produced using the method for producing the petroleum-based high softening point pitch according to one of claims 1 to 10.
